# EUROPÄISCHE PATENTSCHRIFT

(11) **EP 1 581 386 B1**
(45) Veröffentlichungstag und Bekanntmachung des Hinweises auf die Patenterteilung: **06.12.2006**
(21) Anmeldenummer: 03775264.9
(22) Anmeldetag: 30.10.2003
(51) Int. Cl.: B32B 15/00, B32B 18/00, F01D 5/00, C25D 15/02, C23C 4/02, F01D 5/28

(54) **SCHICHTSYSTEM**
LAYER SYSTEM
SYSTEME DE COUCHES

(30) Priorität: 21.11.2002 EP 02026012
(43) Veröffentlichungstag der Anmeldung: 05.10.2005
(73) Patentinhaber: SIEMENS AKTIENGESELLSCHAFT, 80333 München (DE)
(72) Erfinder: HALBERSTADT, Knut, 45481 Mülheim a.d. Ruhr (DE); STAMM, Werner, 45481 Mülheim a.d. Ruhr (DE)
(86) Internationale Anmeldenummer: PCT/EP2003/012095
(87) Internationale Veröffentlichungsnummer: WO 2004/045844

(56) Entgegenhaltungen:
- EP-A- 0 315 122
- EP-A- 0 443 877
- EP-A- 0 783 043
- EP-A- 1 050 663
- US-A- 5 894 053
- US-A- 5 906 895
- US-A1- 2002 076 571
- US-A1- 2002 168 537
- US-B1- 6 440 499

## Beschreibung

Die Erfindung betrifft ein Schichtsystem gemäß dem Oberbegriff des Anspruchs 1.

Die US-PS 5,952,110 offenbart ein Schichtsystem, bei dem grobe Partikel in einer äusseren Schicht enthalten sind. Die groben Teilchen ragen aus der äußeren Oberfläche heraus und dienen zur Erhöhung des abrasiven Widerstands. Die groben Partikel weisen eine andere chemische Zusammensetzung als die Schicht auf.

Die US-PS 5,579,534 offenbart ein Schichtsystem, das mindestens drei Schichten aufweist, bei dem grobe Teilchen auf einer Schicht aus feineren Teilchen angeordnet sind.

Die US 6,444,331 zeigt eine Bondschicht, die aufgerauht ist, um eine verbesserte Haftung von Wärmedämmschicht und Bondschicht zu erreichen.

Schichtsysteme weisen aber immer noch eine schlecht Haftung der Schichten untereinander oder der Schicht auf einem Substrat auf.

Es ist daher Aufgabe der Erfindung, dieses Problem zu überwinden.

Die Aufgabe wird gelöst durch ein Schichtsystem gemäß des Anspruchs 1.

Weitere vorteilhafte Ausgestaltungen des Schichtsystems sind in den Unteransprüchen aufgelistet. Die vorteilhaften Ausgestaltungen der Unteransprüche können miteinander kombiniert werden.

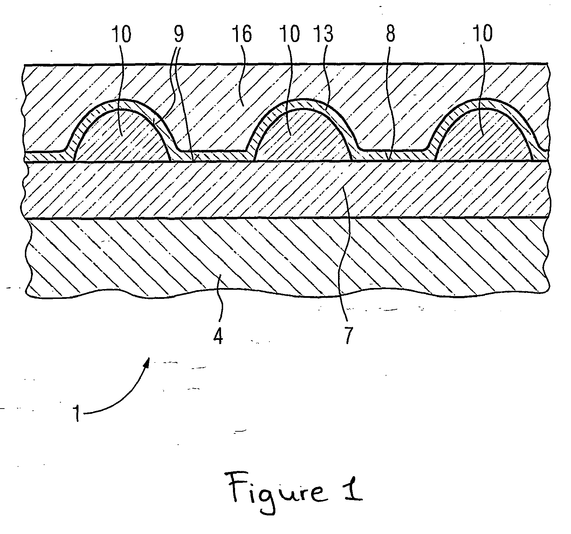

Die Figur zeigt ein Ausführungsbeispiel eines erfindungsgemäßen Schichtsystems 1.

Ein Schichtsystem 1 besteht aus einem Substrat 4, das beispielsweise aus einem keramischen oder einem metallischen Material, insbesondere einer kobalt- oder nickelbasierten Superlegierung, besteht.

Auf dem Substrat 4 ist eine Zwischenschicht 7 angeordnet. Diese Zwischenschicht weist insbesondere eine hohe Dichte auf und besteht im Fall der Superlegierung als Substrat 4 aus der Zusammensetzung des Typs MCrAlY (M= Fe, Co, Ni).

Die Mikrostruktur der Zwischenschicht 7 weist zumindest teilweise feine Teilchen (feine Körnung) auf bzw. ist zumindest teilweise aus Teilchen feiner Körnung hergestellt worden. Feine Körnung bedeutet Korndurchmesser kleiner 22 Mikrometer, insbesondere zwischen 8 und 22 Mikrometer. Der Anteil Teilchen mit feiner Körnung zur Herstellung der Zwischenschicht 7 beträgt bspw. 50%. Insbesondere die Teilchen feiner Körnung erlauben die Herstellung einer dichten Zwischenschicht 7.
Die Teilchen für die Zwischenschicht 7 weisen bspw. Korndurchmesser zwischen 8 und 44 Mikrometer auf.

Die Zwischenschicht 7 kann auf verschiedene Art und Weise hergestellt worden sein: Chemical Vapour Deposition (CVD), Plasmaspritzen (APS, LPPS, VPS,..), High Velocity Oxy Fuel (HVOF) oder andere Beschichtungsmethoden.

Auf der äußeren Oberfläche 8 der Zwischenschicht 7 ist eine möglichst einlagige Schicht aus sehr grobkörnigen Spritzgut 10 aufgebracht, wobei die Korndurchmesser bspw. größer 80 Mikrometer, insbesondere grösser 100 Mikrometer, sind. Dabei wird eine noppenartige Oberfläche gebildet.

Beim Plasmaspritzen wird die Plasmaspritz- Anlage bspw. so eingestellt, dass nur ein Oberflächenbereich der groben Körner 10 aufschmilzt, um eine Haftung der groben Körner 10 auf der Zwischenschicht 7 zu ermöglichen. Die groben Körner 10 weisen bspw. eine Zusammensetzung der Art MCrAlY auf.

Ebenso kann die äußere Oberfläche 8 der Zwischenschicht 7 erwärmt oder aufgeschmolzen werden, d.h. sie ist weich, so dass beim Auftreffen von groben Teilchen 10, insbesondere bei hoher Geschwindigkeit, diese in die Zwischenschicht 7 eindringen und sich dort verankern.

Ebenso können bspw. durch lokales Wachstum auf der Oberfläche 8 grobe Teilchen 10 wachsen gelassen werden, indem lokal auf der Oberfläche 8 verteilt Wachstumskeime vorhanden sind oder die Oberfläche so angeregt ist, dass nur dort Wachstumsbedingurigen gegeben sind.

Die Haftoberfläche 9, die von der Zwischenschicht 7 und den groben Teilchen 10 gebildet wird, ist wesentlich größer als die äußere Schicht der noch unbeschichteten Oberfläche 8 der Zwischenschicht 7.

Auf die so hergestellte Struktur von Zwischenschicht 7 und groben Teilchen 10 wird optional eine weitere dünne Schicht 13 (bspw. 40 bis 80 Mikrometer dick) eines Spritzgutes mittelgrober Körner (mittlere Körnung: 22 bis 62 Mikrometer) mittels bekannter Verfahren aufgetragen.

Die vergrösserte Haftoberfläche 9 bleibt erhalten. Durch die bis um vorzugsweise mindestens 20% größere Haftoberfläche 9 wird eine bessere Haftfestigkeit der äußeren Schicht 16 mit dem Schichtsystem 1 erreicht.

Die Schicht 13 weist bspw. eine Zusammensetzung der Art MCrAlY auf.

Die groben Teilchen 10 und die mittleren Teilchen 13 der Schicht 13 können durch atmosphärisches Plasmaspritzen (APS), Niederdruckplasmaspritzen (LPPS), Vakuumplasmaspritzen (VPS), Kaltgasspritzen oder Sprühkompaktspritzen aufgebracht werden.

Auf die Schicht 13 wird eine äußere Schicht 16 aufgetragen.

Die äußere Schicht 16 ist beispielsweise eine keramische Schicht und im Fall der Anwendung für Turbinenbauteile, insbesondere für Gasturbinenbauteile, ist die äußere Schicht 16 eine Wärmedämmschicht.

## Patentansprüche

1. Schichtsystem (1)
mit einem Substrat (4),
einer Zwischenschicht (7) und
Teilchen (10) grober Körnung,
die auf der Zwischenschicht (7) vorhanden sind,
**dadurch gekennzeichnet,**
**dass** die Teilchen (10) grober Körnung Korndurchmesser größer 80 Mikrometer,
insbesondere größer 100 Mikrometer aufweisen,
dass-die Teilchen (10) eine Zusammensetzung MCrAlY aufweisen,
**dass** die Zwischenschicht (7) eine Zusammensetzung MCrAlY aufweist,
wobei M für ein Element der Gruppe Eisen, Kobalt oder Nickel steht und
**dass** auf den Teilchen (10) eine äußere keramische Schicht (16) aufgebracht ist.

2. Schichtsystem nach Anspruch 1,
**dadurch gekennzeichnet, dass**
auf die groben Teilchen (10) vor Aufbringung der äußeren Schacht (16) eine weitere Schicht (13) aufgebracht ist.

3. Schichtsystem nach Anspruch 2,
**dadurch gekennzeichnet, dass**
die Schicht (13) aus Teilchen mittlerer Körnung besteht und
dass die Teilchen mittlerer Körnung Korndurchmesser zwischen 22 Mikrometer und 62 Mikrometer aufweisen.

4. Schichtsystem nach Anspruch 1,
**dadurch gekennzeichnet, dass**
die Zwischenschicht (7) zumindest teilweise aus Teilchen feiner Körnung besteht und
dass die Teilchen feiner Körnung Korndurchmesser kleiner 22 Mikrometer,
insbesondere 8 und 22 Mikrometer aufweisen.

5. Schichtsystem nach Anspruch 1 oder 4,
**dadurch gekennzeichnet, dass**
die Zwischenschicht (7) dicht ist.

6. Schichtsystem nach Anspruch 1,
**dadurch gekennzeichnet, dass**
das Substrat (4) eine kobalt- oder nickelbasierte Superlegierung ist.

7. Schichtsystem nach Anspruch 1 oder 2,
**dadurch gekennzeichnet, dass**
die groben Teilchen (10) eine Zusammensetzung MCrAlY aufweisen,
wobei M für ein Element der Gruppe Eisen, Kobalt oder Nickel steht.

8. Schichtsystem nach Anspruch 1, 4 oder 5,
**dadurch gekennzeichnet, dass**
die Zwischenschicht (7) durch Plasmaspritzen aufgebracht ist.

9. Schichtsystem nach Anspruch 1,
**dadurch gekennzeichnet, dass**
das Schichtsystem (1) ein Gasturbinenteil ist.

10. Schichtsystem nach Anspruch 4,
**dadurch gekennzeichnet, dass**
der Anteil der Teilchen für die Zwischenschicht (7) mit feiner Körnung bei 50% liegt.

## Claims

1. Layer system (1)
having a substrate (4),
an intermediate layer (7), and
particles (10) of a coarse grain size,
which are present on the intermediate layer (7),
**characterized**
**in that** the particles (10) of a coarse grain size have grain diameters of greater than 80 micrometres,
in particular greater than 100 micrometres,
**in that** the particles (10) have a composition MCrAlY,
**in that** the intermediate layer (7) has a composition MCrAlY,
M standing for an element selected from the group consisting of iron, cobalt or nickel, and
**in that** an outer ceramic layer (16) is applied to the particles (10).

2. Layer system according to Claim 1,
**characterized in that** a further layer (13) is applied to the coarse particles (10) prior to the application of the outer layer (16).

3. Layer system according to Claim 2,
**characterized in that** the layer (13) consists of particles of a medium grain size, and
**in that** the particles of a medium grain size have grain diameters of between 22 micrometres and 62 micrometres.

4. Layer system according to Claim 1,
**characterized in that** the intermediate layer (7) at least partially comprises particles of a fine grain size and **in that** the particles of a fine grain size have grain diameters of less than 22 micrometres, in particular between 8 and 22 micrometres.

5. Layer system according to Claim 1 or 4,
**characterized in that** the intermediate layer (7) is dense.

6. Layer system according to Claim 1,
**characterized in that** the substrate (4) is a cobalt- or nickel-based superalloy.

7. Layer system according to Claim 1 or 2,
**characterized in that** the coarse particles (10) have a composition MCrAlY, in which M stands for an element selected from the group consisting of iron, cobalt or nickel.

8. Layer system according to Claim 1, 4 or 5,
**characterized in that** the intermediate layer (7) is applied by plasma spraying.

9. Layer system according to Claim 1,
**characterized in that** the layer system (1) is a gas turbine part.

10. Layer system according to Claim 4,
**characterized in that** the level of particles for the intermediate layer (7) of a fine grain size is 50%.

## Revendications

1. Système (1) de couches
comprenant un substrat (4),
une couche (7) intermédiaire, et
des particules (10) de granulométrie grossière,
qui sont présentes sur la couche (7) intermédiaire,
**caractérisé**
**en ce que** les particules (10) de granulométrie grossière ont un diamètre de grain supérieur à 80 microns,
notamment supérieur à 100 microns,
**en ce que** les particules (10) ont une composition MCrAlY,
**en ce que** la couche (7) intermédiaire a une composition MCrAlY,
M étant un élément du groupe du fer, du cobalt ou du nickel, et
**en ce qu'**il est déposé sur les particules (10) une couche (16) extérieure en céramique.

2. Système de couches suivant la revendication 1,
**caractérisé en ce que**
il est déposé sur les particules (10) grossières une autre couche (13) avant le dépôt de la couche (16) extérieure.

3. Système de couches suivant la revendication 2,
**caractérisé en ce que**
la couche (13) est constituée de particules de granulométrie médiane, et
**en ce que** les particules de granulométrie médiane ont un diamètre de grain compris entre 22 microns et 62 microns.

4. Système de couches suivant la revendication 1,
**caractérisé en ce que**
la couche (7) intermédiaire est constituée au moins en partie de particules de granulométrie fine, et
**en ce que** les particules de granulométrie fine ont un diamètre de grain inférieur à 22 microns,
notamment compris entre 8 et 22 microns.

5. Système de couches suivant la revendication 1 ou 4,
**caractérisé en ce que**
la couche (7) intermédiaire est dense.

6. Système de couches suivant la revendication 1,
**caractérisé en ce que**
le substrat (4) est un superalliage à base de cobalt ou à base de nickel.

7. Système de couches suivant la revendication 1 ou 2,
**caractérisé en ce que**
les particules (10) grossières ont une composition MCrAlY,
M étant un élément du groupe du fer, du cobalt ou du nickel.

8. Système de couches suivant la revendication 1, 4 ou 5,
**caractérisé en ce que**
la couche (7) intermédiaire est déposée par projection au plasma.

9. Système de couches suivant la revendication 1,
**caractérisé en ce que**
le système (1) de couches est une pièce de turbine à gaz.

10. Système de couches suivant la revendication 4,
**caractérisé en ce que**
la proportion des particules de la couche (7) intermédiaire de granulométrie fine est de 50 %.
